# EUROPEAN PATENT SPECIFICATION

(11) **EP 2 028 585 B1**
(45) Date of publication and mention of the grant of the patent: **14.07.2010**
(21) Application number: 07114697.1
(22) Date of filing: 21.08.2007
(51) Int. Cl.: G06F 3/041, G06F 3/046

(54) **Information processing apparatus, operation input method and computer program product**
Informationsverarbeitungsvorrichtung, Operationseingabeverfahren und Computerprogramm
Appareil de traitement d'informations, procédé d'entrée de fonctionnement et produit de programme informatique

(43) Date of publication of application: 25.02.2009
(73) Proprietor: Wacom Co., Ltd., Saitama 349-1148 (JP)
(72) Inventor: Obi, Katsuhito, Khuki-city Saitama 346-0003 (JP); Horie, Toshihiko, Ageo-city Saitama 362-0045 (JP)
(74) Representative: Richardt, Markus Albert

(56) References cited:
- EP-A- 1 550 941
- WO-A-2006/115946
- WO-A-2007/066488
- DE-A1- 10 310 794
- JP-A- 9 138 730
- US-A1- 2007 152 976

## Description

### Background of the Invention

### Field of the Invention:

The present invention relates to an information processing apparatus and an operation input method, and particularly to an information processing apparatus, an operation input method in which a an apparatus can be operated by touching a surface with a finger or a pen (stylus) and the like.

### Description of the Related Art:

As an operation input device of an information processing apparatus such as a notebook-sized personal computer apparatus, there has been proposed so far an operation input device that includes, in addition to a keyboard with keys corresponding to alphabets, numerals and various symbols disposed thereon, a touch panel which can be operated when a user touches it with a finger and the like. When a user touches this touch panel with a finger and the like, it is possible to change the display position of a pointer displayed on the screen. In the case of the touch panel which can be operated when the user touches it with the finger and the like, a plurality of electrodes may be embedded into an operation surface and the touched position may be detected by detecting electrostatic capacity changed between the electrodes when the user touches the operation surface with the finger and the like.

On the other hand, as an operation input device different from the touch panel, an operation input device called a pen tablet is put into practical use in which a user touches an operation surface with an exclusively-designed pen (stylus) so that the user becomes able to carry out input operation corresponding to the position touched with the stylus. This pen tablet is a pen tablet which might be called an electromagnetic induction type pen tablet in which a plurality of loop coils may be embedded into an operation surface and a magnetic field may be generated from the loop coils. The stylus that serves as a position pointing device includes parts such as coils to react with magnetic field and this electromagnetic induction type pen tablet is able to detect based on an electromagnetic action generated between the magnetic field generated by the loop coils and the stylus the position at which the stylus contacts or approaches the operation surface thereof.

Here, when the touch panel and the pen tablet are mounted on equipment such as a portable personal computer apparatus, from a standpoint of a small space to mount the touch panel and the pen tablet, it is proposed that both of an operation input method of operating the computer apparatus by touching the operation surface with the finger and the like and an operation input method of operating the computer apparatus by touching the operation surface with the stylus can be realized by respective position detecting mechanisms located under the common operation surface.

Cited Patent Reference 1 discloses a technology in which a detecting unit serving as an electrostatic capacity type touch panel and a detecting unit serving as an electromagnetic induction type pen tablet are disposed under a common operation surface.

[Cited Patent Reference 1]: Japanese Published Patent Application No. 9-138730. The Cited Patent Reference 1 describes the processing in which, when the stylus approaches the operation surface with a certain distance, the electromagnetic induction type pen tablet is used with priority and the electrostatic capacity type touch panel is de-energized. However, this processing described in the Cited Patent Reference 1 is not able to switch the two operation input mechanisms satisfactorily.

More specifically, the processing described in the Cited Patent Reference 1 is a processing suitable for the case in which it is fundamentally assumed that the user should operate the stylus in the state in which the stylus is constantly brought in contact with the operation surface. However, the pen tablet can be operated in the state in which the tip end of the stylus is not directly brought in contact with the operation surface but it is approaching the operation surface. Let it now be assumed that the pen tablet should be operated by operation to make the tip end of the stylus close to the operation surface. Then, if operation to detect approach of the tip end of the stylus serves as detection operations to switch operations and input operation as well, then when the pen tablet is operated with the stylus which is not in contact with the operation surface but which is close to the operation surface, there is a possibility that the electromagnetic induction type pen tablet and the electrostatic capacity type touch panel will be switched unintentionally. Such unintentional switching is not preferable.

### Summary of the Invention

The present invention is directed to an information processing apparatus, an operational input method and a computer program as defined in the independent claims. Further embodiments of the invention are as described in the dependent claims.

According to an embodiment of the present invention, two operation input mechanisms are located under a common operation surface. It therefore becomes necessary to switch the two operation input mechanisms. For example, when the display position of the pointer on the display screen of the personal computer apparatus is pointed by these two operation input mechanisms, if it is detected that the electrostatic capacity type touch panel also is touched with the stylus in the situation in which the personal computer apparatus is being operated by touching the operation surface with the position pointing stylus, then detected data from the two operation input mechanisms are both supplied to the personal computer apparatus and it is unavoidable that operation situation will be confused.

For this reason, it is required that the switching processing selectively use the two operation input mechanisms. However, if the two operation input mechanisms are switched by using a switch, then operability will be lowered. Hence, it is preferable that the personal computer apparatus should include an automatic switching mechanism.

According to an embodiment of the present invention, a display panel and the operation input device are formed as one body so that the personal computer apparatus may be operated by touching the display surface with a finger or stylus. Thus, the operability of the personal computer apparatus is improved. Also in this case, the touch panel type operation input device and the pen tablet type operation input device are attached to a common display panel. Embodiments of the present invention provide processing to switch the above two operation input devices.

While embodiments of the present invention relating to an electrostatic capacity type touch panel and an electromagnetic induction type pen tablet which are located at the same position have been described so far, a similar advantages also arise in the case in which two kinds of detecting units with other mechanisms are disposed on the same place.

In view of the aforesaid aspects, embodiments of the present invention provide an information processing apparatus, an operation input method and a sense part in which two kinds of operation detecting mechanisms can be switched and operated satisfactorily when the two kinds of operation detecting mechanisms are disposed near a display surface so that an information processing apparatus may be operated by touching the display surface and the like.

According to an embodiment of the present invention, there is provided an information processing apparatus in having an operation surface and it is detected by a first sense unit whether or not the operation surface is directly touched. It is detected by a second sense unit based on an electromagnetic action generated between it and a position pointing device whether the position pointing device approaches or contacts the operation surface. If it is detected that the position pointing device is placed within a predetermined range, then display processing based on a detected output from the first sense unit is inhibited and display processing based on a detected output from the second sense unit is executed.

According to an embodiment of the invention, in an information processing apparatus in which a display surface of a display device is constructed as an operation surface operated from the outside, when the information processing apparatus has an arrangement to accept inputs based on operation, it is detected electrically by a first detection processing whether or not the display surface is directly touched. It is detected by a second detection processing based on an electromagnetic action generated between it and a position pointing device whether the position pointing device approaches or contacts the display surface. It is detected based on a detected output from the second detection processing whether the position pointing device approaches the inside of a range from the display surface. If it is detected that the position pointing device is placed within the range, then display processing based on a detected output from the first detection processing is inhibited and display processing based on a detected output from the second detection processing is executed.

In this case, since the range in which the first sense unit detects that the operation surface or display surface is touched is substantially equal to the operation surface or display surface in size and the range in which the second sense unit detects that the operation surface or display surface is touched is wider than the detection range of the first sense unit, the input operation to directly touch the operation surface or display surface and the input operation to make the position pointing device close to the operation surface or display surface can be carried out satisfactorily. In particular, it becomes possible to detect approaching of the position pointing device to the operation surface or display surface satisfactorily even when the position pointing device is located at the position distant from the edge of the display surface with a certain distance.

Also, when the position pointing device is moved to the outside of the range from the state in which it is detected that the position pointing device is located within the range, if it is detected by the first sense unit that the operation surface or display surface is touched, then display processing based on the detected output from the first sense unit is continuously inhibited. If it is detected that the first sense unit no more detects that the operation surface or display surface is touched, then display processing based on the detected output from the first sense unit can be executed. For example, when the information processing apparatus is operated with the position pointing device, even if the operation surface or display surface is touched with the finger and the like, input operation based on the detected output from the first sense unit may not be resumed so long as the touched finger and the like may not release the operation surface or display surface temporarily and satisfactory operability can be maintained.

### Brief Description of the Drawings

- FIG. 1: is an external view showing an example of an arrangement of a computer apparatus according to an embodiment of the present invention;
- FIGS.2A and 2B: are exploded perspective views showing an example in which constituent pars are disposed within the computer apparatus with part of a position detecting unit of the computer apparatus being shown in an exploded fashion according to an embodiment of the present invention;
- FIG. 3: is a functional block diagram showing an example of an arrangement of a computer apparatus according to an embodiment of the present invention;
- FIG. 4: is a block diagram showing an example of an arrangement of an electrostatic capacity system position detecting unit according to an embodiment of the present invention;
- FIG. 5: is a schematic block diagram showing an example of an arrangement of an electromagnetic system position detecting unit according to an embodiment of the present invention;
- FIGS. 6A to 6C: are cross-sectional views taken along the line I - I in FIG. 2A and illustrate the detection range and the states in which a position pointing device is approaching the detection range, respectively;
- FIG. 7: is a flowchart showing an example of detection processing according to an embodiment of the present invention;
- FIG. 8: is a flowchart showing an method for controlling display processing based on inputs from a first sense unit and a second sense unit according to an embodiment of the present invention;
- FIG. 9: is a flowchart showing a detailed example (example 1) of stylus approaching detection processing according to an embodiment of the present invention;
- FIG. 10: is a flowchart showing a detailed example (example 2) of stylus approaching detection processing according to an embodiment of the present invention;
- FIG. 11: is a flowchart showing an example of processing executed during touch input is being detected by an electrostatic capacity system position detecting unit according to an embodiment of the present invention;
- FIG. 12: is a flowchart showing an example of processing executed during stylus input is being detected by an electromagnetic system position detecting unit according to an embodiment of the present invention;
- FIG. 13: is an external view showing an example of an arrangement of a computer apparatus according to an embodiment of the present invention;
- FIG. 14: is a perspective view showing an example of layout of elements and parts according to an embodiment of the present invention;
- FIGS. 15A to 15C: are cross-sectional views to which reference will be made in explaining the detection range and the states in which a position pointing device is approaching the detection range, respectively;
- FIG. 16: is a perspective view showing an example of an arrangement of a modified example of an embodiment of the present invention; and
- FIG. 17: is a perspective view showing an example of an arrangement of another modified example of an embodiment of the present invention.

### Description of the Preferred Embodiments

An embodiment of the present invention will now be described below with reference to the drawings.

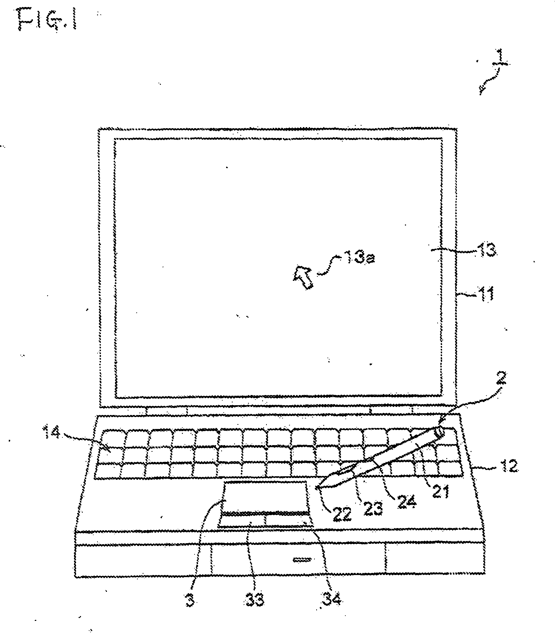

FIG. 1 of the accompanying drawings is an external view showing a schematic arrangement of a computer apparatus. A computer apparatus, generally depicted by reference numeral 1 in FIG. 1, is what might be called a notebook-sized computer apparatus and this computer apparatus 1 includes an upper case 11 and a lower case 12 that can be folded like a flip-type mobile phone.

The upper case 11 has a display 13 formed of a liquid-crystal display (LCD) panel provided thereon. Various keys operated by a user, a position detecting unit 3 and switches 33 and 34 are disposed on the key input unit 14.

The key input unit 14 includes various function keys such as numeral keys, character keys and symbol keys and it is adapted to detect depression operations of these keys.

The position detecting unit 3 is a position detecting apparatus for detecting contact position (absolute position or relative position) at which the user touches it with the finger. The upper surface of the position detecting unit 3 is formed of a flat surface which is substantially flush with the upper surface of the lower case 12 or a flat surface slightly lower than the upper surface of the lower case 12. This flat surface of the position detecting unit 3 serves as an operation surface which can accept position input operation done by the user's finger as well.

Also, the position detecting unit 3 is able to detect position input operations done by not only the user's finger but also a position pointing device 2.

As shown in FIG. 1, the position pointing device 2 includes a pen-like case 21 and a pen-point 22 is projected from the tip end of this pen-like case 21. Switches 23 and 24, which are depressed by the user's finger, are arrayed on the side surface of the case 21. When the position pointing device 2 is in use, the user may hold the position pointing device 2 with the fingers in exactly the same manner as to hold a pen with the fingers and the user may press the pen-point 22 against the operation surface of the position detecting unit 3.

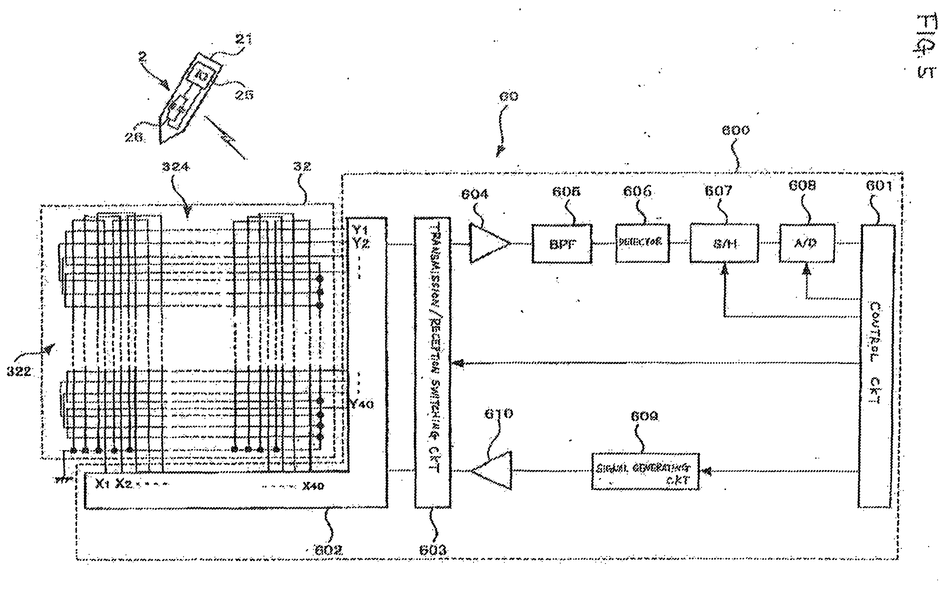

When operated by the user, the position pointing device 2 is able to transmit a wireless signal to the position detecting unit 3 owing to functions of a resonance circuit 26 and an IC (integrated circuit) 25 which will be described later on with reference to FIG. 5. The position detecting unit 3 is able to detect the position pointed by the position pointing device 2 by receiving the wireless signal transmitted from the position pointing device 2. Also, owing to the functions of the IC 25 and the resonance circuit 26, the position pointing device 2 detects pushing force (stylus pressure) applied to the pen-point 22 of the stylus when the position pointing device 2 is operated, generates a signal indicative of the stylus pressure level and transmits this signal to the position detecting unit 3 together with a signal to point the position. Further, owing to the functions of the IC 25 and the resonance circuit 26, the position pointing device 2 detects the operated states of the switches 23 and 24, generates a signal indicative of the operated states of this switches 23 and 24 and transmits this signal to the position detecting unit 3 together with the signals to point the position.

When receiving the signal transmitted from the position pointing device 2, the position detecting unit 3 detects the position pointed by the position pointing device 2 and it also detects the stylus pressure applied to the pen-point 22 of the position pointing device 2 when the position pointing device 2 is operated and the operated states of the switches 23 and 24.

Switches 33 and 34 are adjacent to the position detecting unit 3 and are provided on the upper surface of the lower case 12. The switches 33 and 34 are those which are energized when depressed and they are operated in combination with the position detecting unit 3.

Here, the operation surface of the position detecting unit 3 is substantially square on which an imaginary X-Y coordinates system is set in which the long side direction is assumed to be X direction and the short side direction is assumed to be Y direction. The position detecting unit 3 detects the position touched with the user's finger and the position pointed by the position pointing device 2 as an absolute position or a relative position in the above-described X-Y orthogonal coordinates system.

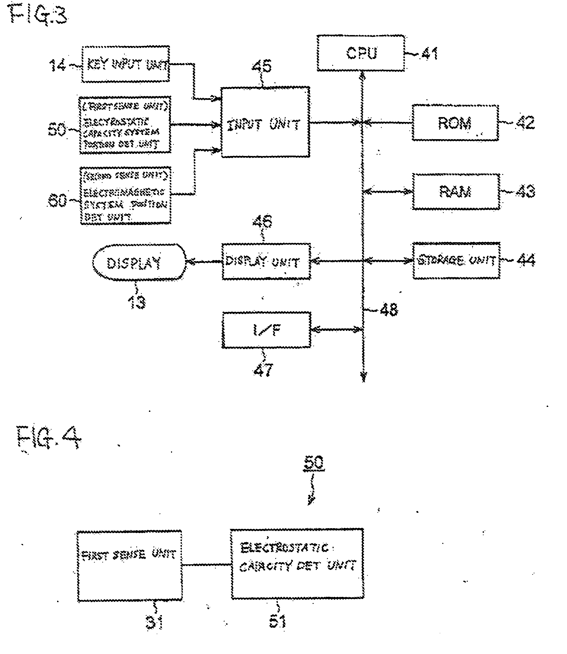

Then, the computer apparatus 1 shown in FIG. 1 is able to realize various functions of computer by executing various application programs in accordance with instructions inputted by operating the key input unit 14, the position detecting unit 3 and the switches 33 and 34. When these application programs are executed, various screens concerning data being processed and the like are displayed on the display 13. When pointing of the position is detected by the position detecting apparatus 3, the displayed position of the pointer 13a displayed on the display 13, for example, is changed in response to the detected state. The change of this displayed position is executed under display control of a CPU (central processing unit) 41 (FIG. 3) which will be described later on.

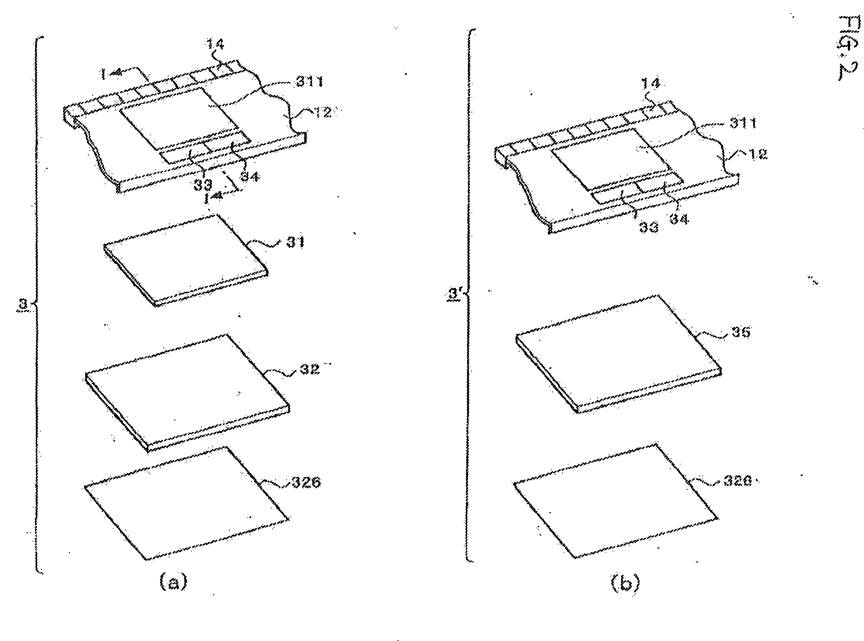

FIGS. 2A and 2B are exploded perspective views showing the arrangement portion of the position detecting unit 3 of the computer apparatus 1, wherein FIG. 2A shows an example in which a plurality of sense units is located individually and FIG. 2B shows an example in which a plurality of sense units is integrated and located.

First, the example in which a plurality of sense units is individually located will be described with reference to FIG. 2A. As shown in FIG. 2A, a first sense unit 31 is located on the lower side of a surface protecting layer 311 serving as an operation surface disposed on the surface of the lower case 12. The first sense unit 31 is a position detecting device for detecting whether or not the surface protecting layer 311 is directly touched with the user's finger and the like. The first sense unit 31 according to this embodiment is used as device to point relative position. Then, a second sense unit 32 is located under the first sense unit 31. The second sense unit 32 is a unit to detect operations done by the position pointing device 2 (FIG. 1). The second sense unit 32 according to this embodiment is used as a device to point absolute position. Further, a shield plate 326 is located under the second sense unit 32. It should be noted that an auxiliary conductor plate (not shown) that can function as a ground electric potential unit of the first sense unit 31 is disposed between the first and second sense units 31 and 32. Also, the first sense unit 31 has substantially the same area as that of the surface protecting layer 311. The second sense unit 32 and the shield plate 326 have areas larger than that of the first sense unit 31 to thereby extend the detection range up to the peripheral portion of the surface protecting layer 311.

FIG. 2B shows the example in which a plurality of sense portions is integrated as one body. In this case, a composite sense unit 35 is located on the lower side of the surface protecting layer 311 as a position detecting unit 3'. This composite sense unit 35 is formed by integrating the first sense unit 31 and the second sense unit 32 shown in FIG. 2A as one body. An arrangement in which the electrode constructing the first sense unit 31, for example, and the loop coil constructing the second sense unit 32 are alternately located on the same plane can be applied to the integrated arrangement. Then, the shield plate 326 is located under the composite sense unit 35.

It should be noted that, when the first sense unit 31 and the second sense unit 32 are laminated as shown in FIG. 2A, they can be constructed as an integrated part (sense part). Also, the sense part may incorporate therein circuit parts operable as an electrostatic capacity system position detecting unit 50 (FIG. 3) and an electromagnetic system position detecting unit 60 (FIG. 3) which will be described later on.

Further, the sense part may incorporate therein a part of function of an input unit 45 (FIG. 3) which will be described later on.

FIG. 3 is a functional block diagram showing an arrangement of the computer apparatus 1.

As shown in FIG. 3, the computer apparatus 1 includes a CPU (central processing unit) 41 for controlling respective units of the computer apparatus 1 by executing various control programs, a ROM (read-only memory) 42 for storing control programs executed by the CPU 41 and the like, a RAM (random-access memory) 43 serving as a work area to temporarily store programs and data executed by the CPU 41 and the like and a storage unit 44 for storing control programs, application programs executed by the CPU 41 and data concerning these programs.

Also, the computer apparatus 1 includes the key input unit 14 and the input unit 45 that is connected to the electrostatic capacity system position detecting unit 50 to detect the position of user's finger in the position detecting unit 3 and the electromagnetic system position detecting unit 60 to detect position input operation done by the position pointing device 2 in the position detecting unit 3. The electrostatic capacity system position detecting unit 50 detects touch of user's finger by using the first sense unit 31 of the position detecting unit 3 and generates an operation signal indicative of the detected position. Then, the electrostatic capacity system position detecting unit 50 may output this operation signal to the input unit 45. Also, the electromagnetic system position detecting unit 60 detects position input operation done by the position pointing device 2 by using the second sense unit 32 of the position detecting unit 3 and generates operation signals indicative of detected positions, stylus pressure in the position pointing device 2 and operated states of the switches 23 and 24. Then, the electromagnetic system position detecting unit 60 may output the operation signals to the input unit 45. It should be noted that, when the position input operation of the position pointing device 2 is to be detected by using the second sense unit 32, the state in which the tip end (that is, pen-point) of the position pointing device 2 touches the surface of the surface protecting layer 311 may be detected and the state in which the tip end of the position pointing device 2 is moved close to the surface of the surface protecting layer 311 may be detected. When the tip end of the position pointing device 2 close to the surface protecting layer 311 is moved close to the surface protecting layer 311, the control circuit 601 (FIG. 5) within the electromagnetic system position detecting unit 60 is able to judge a rough distance between the tip end of the position pointing device 2 and the surface protecting layer 311 from the detected states. By detecting this distance as described above, the input unit 45 becomes able to carry out processing to accept any one of the operation inputs required when both of detection by the electrostatic capacity system detecting unit 50 and detection by the electromagnetic system detecting unit 60 are possible at the same time. The details of this processing will be described later on. It should be noted that embodiments the present invention are not limited to the arrangement in which the approach detecting processing for detecting a distance in which the tip end of the position pointing device 2 become close to the surface protecting layer 311 is executed by the control circuit 601 within the electromagnetic system position detecting unit 60 and can be also applied to an arrangement in which the CPU 41 on the side of the computer apparatus 1 functions as the approach detecting unit.

The input unit 45 generates operation information corresponding to the operated keys when the user operates the keys in the key input unit 14. Also, the input unit 45 generates operation information indicative of operation contents detected by the electrostatic capacity system position detecting unit 50 and the electromagnetic system position detecting unit 60 based on the operation signal inputted from the electrostatic capacity system position detecting unit 50 or the electromagnetic system position detecting unit 60. The CPU 41 is able to execute various operations by acquiring operation information generated from the input unit 45.

Further, the computer apparatus 1 includes a display unit 46 to drive the display 13 (FIG. 1) based on screen display data inputted from the CPU 41 to thereby display various screens on the display 13 and an interface (I/F) 47 connected to various equipment provided at the outside of the computer apparatus 1 to thereby transmit and receive various information between these equipment. The respective units of the above-described CPU 41, ROM 42, RAM 43, storage unit 44, input unit 45, display unit 46 and I/F 47 are connected to one another via a bus 48.

The CPU 41 may control respective units of the computer apparatus 1 by reading a fundamental control program from the ROM 42 and executing the same. Also, the CPU 41 may read the application program from the storage unit 44 and develop and execute the read application program in the work area of the RAM 43 to thereby execute processing of various data. Also, during executing the fundamental control program and the application program, the CPU 41 may generate screen display data to display screens concerning the corresponding programs and output the same to the display unit 46, whereby the above-described screens can be displayed on the display panel 5. Also, when operation information corresponding to the position of operation done by the user's finger or operation information corresponding to position input operation done by the position pointing device 2 is inputted to the CPU 41 from the input unit 45, the CPU 41 may discriminate pointed contents obtained by the position input operation based on the above operation information and the screen displaying data outputted to the display unit 46 and may execute operations corresponding to the thus discriminated pointed contents.

FIG. 4 is a functional block diagram showing an arrangement of the electrostatic capacity system position detecting unit 50. As shown in FIG. 4, the electrostatic capacity system position detecting unit 50 includes the first sense unit 31 (FIG. 2) of the position detecting unit 3 and an electrostatic capacity detecting circuit (electrostatic capacity detecting unit) 51 connected to the electrodes within this first sense unit 31.

The electrostatic capacity detecting circuit 51 applies a predetermined voltage to each of a plurality of electrodes within the first sense unit 31, whereby predetermined electrostatic capacity is generated between the opposing electrodes. When the user's finger touches the operation surface of the position detecting unit 3 to change the electrostatic capacity between the opposing electrodes, the electrostatic capacity detecting circuit 51 may specify the electrodes of which electrostatic capacity was changed considerably, it may obtain the position at which the user' finger touches the operation surface of the position detecting unit 3 by executing calculating processing based on the corresponding position and the degree in which the electrostatic capacity is changed and it may calculate corresponding coordinates (absolute position coordinates or relative position coordinates). Further, the electrostatic capacity detecting circuit 51 generates an operation signal indicative of the thus calculated coordinates and outputs this operation signal to the input unit (FIG. 3).

FIG. 5 is a schematic block diagram showing an arrangement of the electromagnetic system position detecting unit 60. As shown in FIG. 5, the electromagnetic system position detecting unit 60 has an arrangement in which the respective loop coils 322 and the respective loop coils 324 of the position detecting unit 3 are connected to an electromagnetic system detecting circuit (electromagnetic system detecting function unit) 600. It should be noted that the position pointing device 2 also is shown in FIG. 5 together with the electromagnetic system position detecting unit 60 in order to understand embodiments of the present invention more clearly.

The position detecting device 2 includes a resonance circuit 26 including a coil and a capacitor although not shown, and an IC (integrated circuit) 25 is connected to the resonance circuit 26.

On the other hand, the electromagnetic system detecting circuit 600 includes a selecting circuit 602 to select one loop coil from a plurality of loop coils 322 and 323 of the position detecting unit 3 and a transmission and reception switching circuit 603 to switch the transmission mode to transmit a signal to the loop coil selected by the selecting circuit 602 and the reception mode to receive a signal from the position pointing device 2 by the loop coil selected by the selecting circuit 602.

Also, the electromagnetic system detecting circuit 600 further includes a control circuit 601 to control respective units of the electromagnetic system detecting unit 600, an amplifying circuit 601 to amplify a signal outputted from the transmission and reception switching circuit 603, a BPF (bandpass filter) 605 to pass only a signal component of a predetermined frequency band with respect to the signal amplified by the amplifying circuit 604, a detecting circuit 606 to convert the signal component passed through the BPF 605 into a voltage value, a sample-and-hold (S/H) circuit 607 to hold this voltage value during a predetermined time period, an A/D (analog-to-digital) converting circuit 608 to convert the voltage value held in the sample-and-hold circuit 607 into digital data and outputting this digital data to the control circuit 601, a signal generating circuit 609 for generating an oscillation signal with a predetermined frequency under control of the control circuit 601 and an amplifying circuit 610 to amplify the signal generated from the signal generating circuit 609 and outputting the thus amplified signal to the transmission and reception switching circuit 603.

The manner in which the electromagnetic system detecting circuit 600 may detect position input operation done by the position pointing device 2 will be described below.

First, the control circuit 601 controls the selecting circuit 602 so as to select one loop coil and it also controls the transmission and reception switching circuit 603 so as to switch the operation mode to the transmission mode.

Subsequently, the control circuit 601 controls the signal generating circuit 609 so that the signal generating circuit 609 may generate a signal with a predetermined frequency. This signal is amplified by the amplifying circuit 610 and inputted through the transmission and reception switching circuit 603 to the selecting circuit 602 to cause an electric current corresponding to the above-described signal to flow through the loop coil selected by the selecting circuit 602. As a result, a magnetic field (alternating field) is generated around the corresponding loop coil.

Here, in the position pointing device 2, an induced electric current may flow to the resonance circuit 26 owing to the magnetic field generated around the loop coil of the electromagnetic system detecting circuit 600 to enable the IC 25 to start operation. The IC 25 generates a signal with a predetermined frequency relative to the resonance circuit 26 and allows the thus generated signal to be transmitted from the resonance circuit 26 to the electromagnetic system detecting circuit 600.

The control circuit 601 of the electromagnetic system detecting circuit 600 switches the operation mode to the reception mode by controlling the transmission and reception switching circuit 603 after the operation of the above-described transmission mode was continued during a predetermined time period. When the operation mode is switched to the reception mode as described above, the signal from the signal generating circuit 609 is not outputted to the selecting circuit 602.

In this reception mode, the signal from the position pointing device 2 by the operation of the IC 25 is received by the loop coil selected by the selecting circuit 602. More specifically, when the IC 25 is operated, the signal is applied to the resonance circuit 26 and an electric current corresponding to this signal flows through the resonance circuit 26 and a magnetic field is generated around the resonance circuit 26 so that this magnetic field causes an induced electric current to flow through the loop coils 322 and 324. Then, the electric current flowing through the selected loop coils is amplified by the amplifying circuit 603 and only the component of the predetermined frequency band is outputted to the detecting circuit 606 by the BPF 605. This component is converted into a voltage value by the detecting circuit 606 and held in the sample-and-hold (S/H) circuit 607. The voltage value held in the sample-and-hold circuit 607 is converted into digital data by the A/D converting circuit 608 and outputted to the control circuit 601.

Then, while the loop coils 322 and 324 are sequentially being selected by the selecting circuit 602, the control circuit 601 may specify the loop coil close to the position pointed by the position pointing device 2 and may calculate coordinates of the pointed position by calculating the digital data inputted from the A/D converting circuit 608.

Also, during the electric current is flowing through the resonance circuit 26, the IC 25 in the position pointing device 2 detects stylus pressure applied to the pen-point 22 (FIG. 1) and operated states of the switches 23 and 24 (FIG. 1) and changes transmission timing and transmission time of the oscillation signal to the resonance circuit 26. The changes of the transmission timing and the transmission time may reflect on the processing done when the voltage value held in the sample-and-hold circuit 607 is converted into digital data by the A/D converting circuit 608. Then, the control circuit 601 in the electromagnetic system detecting circuit 600 may acquire the stylus pressure and the operated states of the switches 23 and 24 by calculating the digital data inputted from the A/D converting circuit 608.

After that, the control circuit 601 generates an operation signal indicative of the position pointed by the position pointing device 2, the stylus pressure in the position pointing device 2 and the operated states of the switches 23 and 24 and outputs this operation signal to the input unit 45.

It should be noted that, while the pen-shaped position pointing device 2 includes the IC 25 in the arrangement shown in FIG. 5, embodiments of the present invention are not limited thereto and such pen-shaped position pointing device 2 may not always include the IC 25.

According to the computer apparatus 1 having the above-mentioned arrangement, the computer apparatus 1 includes the electrostatic capacity system position detecting unit 50 to detect the operation done by the user's finger and the electromagnetic system position detecting unit 60 to detect the position input operation done by the position pointing device 2 so that the computer apparatus 1 is able to individually detect the operation done by the user's finger on the operation surface of the position detecting unit 3 and the operation done by the position pointing device 2. Consequently, it becomes possible for the user to carry out input operations by a plurality of methods with different feels of operation, and operability can be improved.

Also, since the position detecting unit 3 has the arrangement in which the first sense unit 31 to detect operation done by the use's finger and the second sense unit 32 to detect operation done by the position point device 2 are placed one upon another, if only the position detecting unit 3 is provided on the lower case 12 of the computer apparatus 1, then it becomes possible for the user to carry out input operations by using the finger and the position pointing device 2 and hence the position detecting unit 3 can be easily applied to small equipment whose case size is limited. Input operation based on detection at the electrostatic capacity system detecting unit 50 and input operation based on detection at the electromagnetic system position detecting unit 60 are inhibited from being carried out at the same time, and the computer apparatus 1 may accept only one of the above input operations. Depending on the cases, the computer apparatus 1 may not accept both of the above input operations.

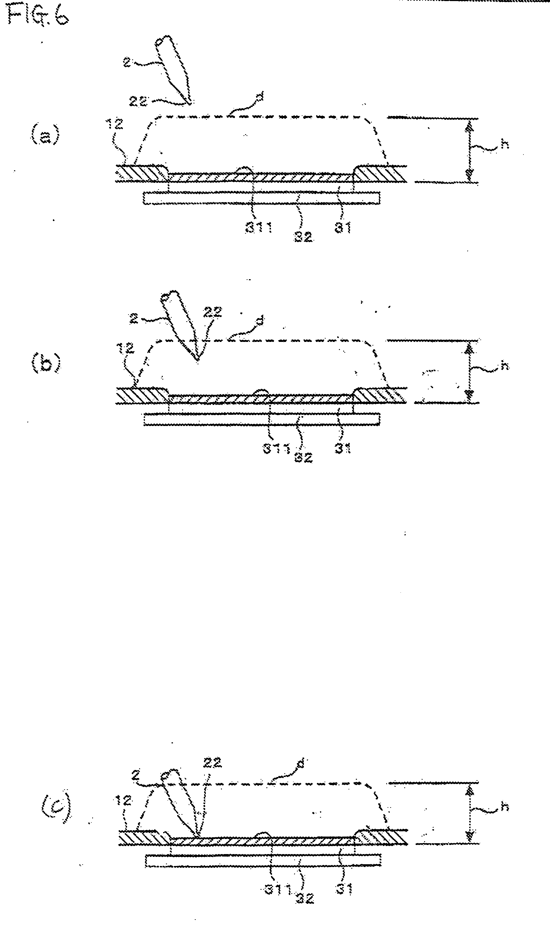

Next, the states in which two detection processes, such as the electrostatic capacity system contact detection at the first sense unit 31 and the electromagnetic system contact or close detection at the second sense unit 31, are executed selectively will be described below. FIGS. 6A to 6C are schematic cross-sectional views showing the portion in which elements and parts are located on the surface protecting layer 311 (FIGS. 1 and 2) of the lower case 12 of the computer apparatus 1 according to this embodiment, respectively. As shown in FIG. 6A, the first and second sense units 31 and 32 are located at the lower portion of the surface protecting layer 311.

The first sense unit 31 is adapted to execute processing to detect whether or not the surface protecting layer 311 is directly touched with the user's finger. The second sense unit 32 is adapted to execute processing to detect whether the tip end 22 of the pen-like position pointing device 2 approaches or contacts the surface protecting layer 311. In order to detect whether or not the tip end 22 of the position pointing device 2 approaches the surface protecting layer 311, as shown in FIG. 6A, there are assumed a detection range d to detect whether or not the tip end 22 of the position pointing device 2 approaches an extent ranging from the surface protecting layer 311 to a portion less than a t height. The control circuit 601 (FIG. 5) within the electromagnetic system position detecting unit 60 is adapted to determine whether or not the tip end 22 of the position pointing device 2 lies within the detection range d. The height h is about several centimeters, for example, or about 1 centimeter, for example.

It should be noted that, in the case of this embodiment, the area of the second sense unit 32 is larger than that of the first sense unit 31 and that the detection range d is extended up to the peripheral portion of the lower case 12 in which the surface protecting layer 311 is not disposed.

The states shown in FIGS. 6A to 6C illustrate the states in which the positions of the tip end 22 of the pen-like position pointing device 2 are being changed. The control circuit 601 is able to discriminate and detect these three states. More specifically, the state shown in FIG. 6A illustrates the state in which the tip end 22 of the position pointing device 22 lies outside the detection range d. The state shown in FIG. 6B shows the state in which the tip end 22 of the position pointing device 22 lies within the detection range d. The state shown in FIG. 6C illustrates the state in which the tip end 22 of the position pointing device 2 is brought in contact with the surface protecting layer 311. It should be noted that, in the state in which the tip end 22 of the position pointing device 2 is brought in contact with the surface protecting layer 311, pressure (stylus pressure) with which the tip end 22 of the position pointing device 2 contacts with the surface protecting layer 311 can be detected based on a signal from the position pointing device 2. As shown in FIGS. 6A to 6C, since the area of the second sense unit 32 is larger than that of the first sense unit 31, the detection range d is extended slightly to the surface direction of the surface protecting layer 311. According to this arrangement, when the position pointing device 2 approaches the surface protecting layer 311 from the lateral direction, it is possible to reliably detect the approach of the position pointing device 2 to the surface protecting layer 311.

Then, based on various kinds of the above-mentioned detection states, the control circuit 601 issues an interrupt request to the input unit 45 of the computer apparatus 1. When the conditions, which will be described next, are satisfied, the input processing based on the output from the electromagnetic system position detecting unit 60 is executed with priority to the input processing based on the output from the electrostatic capacity system position detecting unit 50.

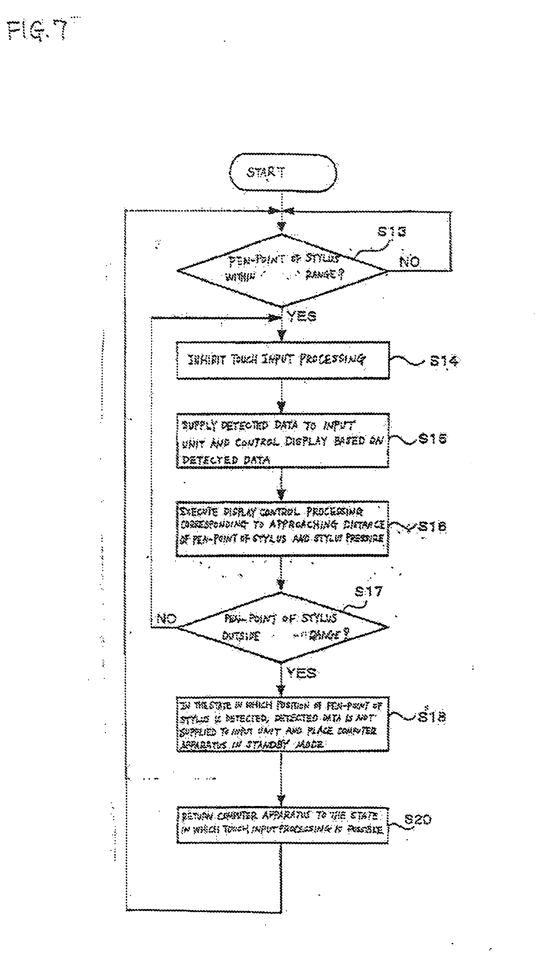

Next, an example of the selection of input processing based on the outputs from the two detecting units 50 and 60 will be described with reference to a flowchart of FIG. 7. It should be noted that, in the following description, electrostatic capacity system contact detection in the first sense unit 31 will be referred to as a "touch input" and that electromagnetic system detection at the second sense unit 32 using the position pointing device 2 as the stylus will be referred to as a "stylus input".

First, referring to FIG. 7 in detail, and following the start of operation, control goes to a decision step S13, whereat it is determined whether or not the tip end (pen-point) of the stylus is within the range shown in FIGS. 6A to 6C. If the pen-point of the stylus is located outside the range as represented by a NO at the decision step s13, then the computer apparatus 1 is placed in the standby state and the operator is able to carry out touch input. If the pen-point of the stylus approached the inside of the range as represented by a YES at the decision step S13, then control goes to a step S14, whereat processing to inhibit touch input processing is executed. Then, control goes to a step S15, whereat stylus input processing detection data is supplied to the input unit 45 and display control based on the detection data is executed. Control goes to the next step S16, whereat display control corresponding to the approaching distance of the pen-point and the stylus pressure is executed. After that, it is determined at the next decision step S17 whether or not the pen-point is moved outside the range. If the pen-point is not moved outside the range (that is, the pen-point lies within the range) as represented by a NO at the decision step S17, then the steps S14 to S16 are continued.

If on the other hand the pen-point of the stylus lies outside the range as represented by a YES at the decision step S17, then control goes to a step S18, whereat the detection data is not supplied to the input unit 45 and the control unit 601 is placed in the standby mode. Then control goes to a step S20, whereat the control circuit 601 returns to the state in which the touch input processing can be carried out. Then, control goes back to the decision step s11.

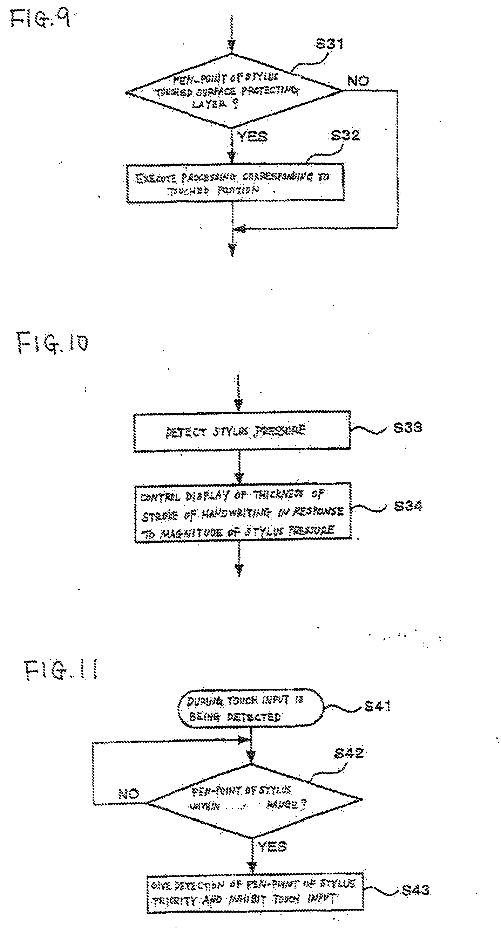

Next, detailed processing examples at the steps S16 shown in the flowcharts of FIG. 7 will be described with reference to a flowchart (example 1) shown in FIG. 9 and a flowchart (example 2) shown in FIG. 10.

The example shown in FIG. 9 will be described. It is determined at a decision step S31 whether or not the pen-point of the stylus touches the surface protecting layer 311. If the pen-point of the stylus does not touch the surface protecting layer 311 as represented by a NO at the decision step S31, then ordinary display processing to change the display position of the pointer 13a (see FIG. 1) displayed on the screen in response to the detection position is carried out. If the pen-point of the stylus touches the surface protecting layer 311 as represented by a YES at the decision step S31, then control goes to a step S32, whereat other processing corresponding to the contact position such as not only to change the display position of the pointer 13a but also to select the pointed position is carried out at the same time.

The example shown in FIG. 10 will be described. In this example, it is assumed that a mode to draw a line in response to the change of the position at which the pen-point of the stylus touches the surface protecting layer 311 is set. In this case, control goes to a step S33, whereat stylus pressure with which the pen-point of the stylus touches the surface protecting layer 311 is detected. Then, control goes to a step S34, whereat a width of trace of line drawn on the display screen is changed in response to the detection data of the stylus pressure is changed. That is, if stylus pressure is small, then handwritten trace corresponding to the change of stylus position is displayed by a thin trace width. If stylus pressure is large, then a handwritten trace corresponding to the change of stylus position is displayed by a thick trace width.

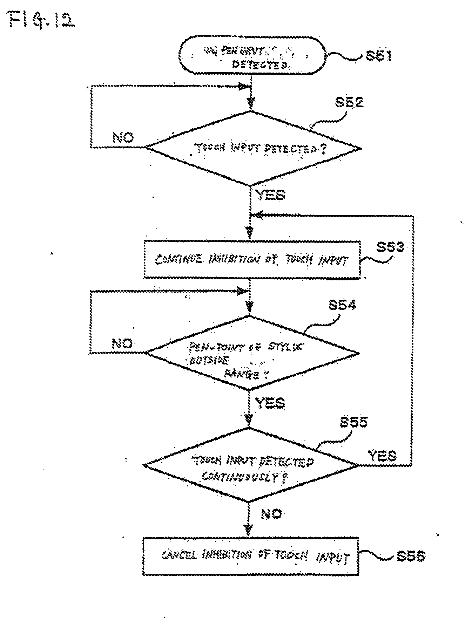

Next, a processing example executed during touch input is being detected (FIG. 11) and a processing example executed during stylus input is being detected (FIG. 12) will be described with reference to respective flowcharts of FIGS. 11 and 12. First, a processing example executed during touch input is being detected will be described with reference to a flowchart of FIG. 11. As shown in FIG. 11, touch input is being detected at a step S41. Then, control goes to a decision step S42, whereat it is determined whether or not the pen-point of the stylus is within the range. If the pen-point of the stylus is within the range as represented by a YES at the decision step S42, then control goes to a step S43. In the step S43, processing based on detection of pen-point position of the stylus is executed with priority and display control based on touch input is inhibited.

A processing example executed during stylus input is being detected shown in FIG. 12 will be described. As shown in FIG. 12, the stylus is within the second range and display control processing based on the stylus input is carried out at a step S51. Then, control goes to the next decision step S52 whether or not the pen-point of the stylus touches the surface protecting layer 31. If touch input is carried out as represented by a YES at the decision step S52, then control goes to a step S53, whereat inhibition of touch input is continued. Then, control goes to the next decision step S54. It is determined at the decision step S54 whether or not the pen-point of the stylus is moved to the outside the range. If the pen-point of the stylus is not outside the range (that is, the pen-point of the stylus lies within the range) as represented by a NO at the decision step S54, then inhibition of touch input is continued and the control circuit 601 is set to the standby mode. If on the other hand the pen-point of the stylus is moved to the outside of the range as represented by a YES at the decision step S54, then control goes to the next decision step S55. It is determined at the decision step S55 whether or not touch input is being detected continuously. If touch input is being detected continuously as represented by a YES at the decision step S55, then control goes back to the step S53, whereat inhibition of touch input is continued regardless of the change of the position of the pen-point of the stylus. If on the other hand touch input is not detected continuously as represented by a NO at the decision step S55, then control goes to a step S56, whereat inhibition of touch input is canceled. If touch input is detected later on, then the control circuit 601 is placed in the state to accept touch input.

According to the processing shown in the flowchart of FIG. 12, when the pen-shaped position pointing device 2 is brought in contact with the surface protecting layer 311 which is the operation surface, even if the surface protecting layer 311 is touched with the fingers gripping the position pointing device 2, it is possible to effectively prevent malfunction caused by touch on the surface protecting layer 311. More specifically, even when the pen-point of the pen-shaped position pointing device 2 is temporarily detached from the surface of the surface protecting layer 311 with a long distance in the state in which the surface protecting layer 311 is touched with the fingers gripping the pen-like position pointing device 2, so long as the fingers touched with the surface protecting layer 311 is once completely detached from the surface protecting layer 311, touch input processing is not executed and the control circuit 601 is placed in the standby mode in which the stylus input processing becomes possible. Accordingly, it is possible to satisfactorily prevent malfunction caused by the touch input according to the change of temporary stylus input contact state.

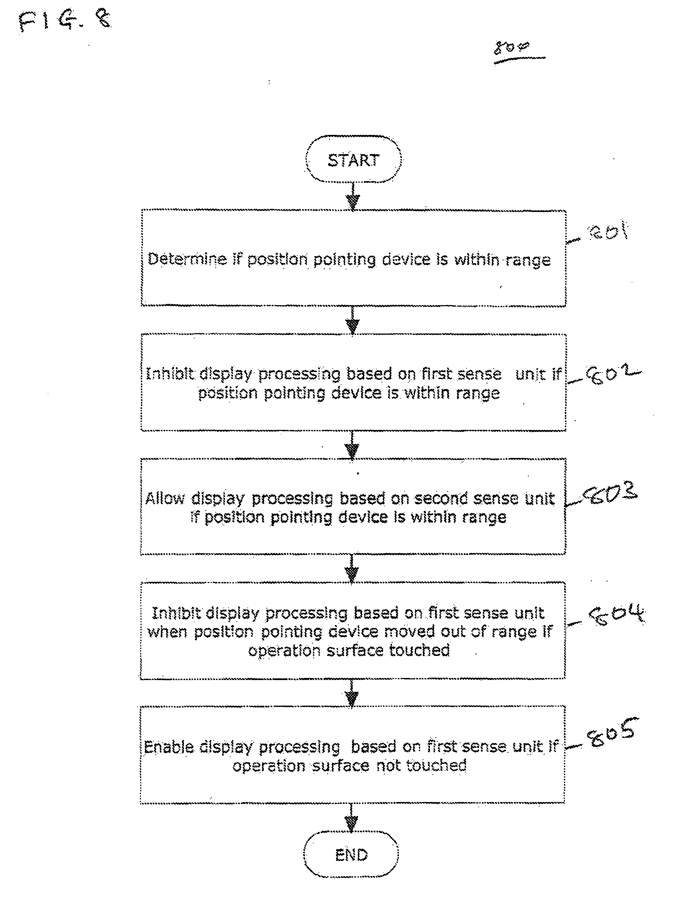

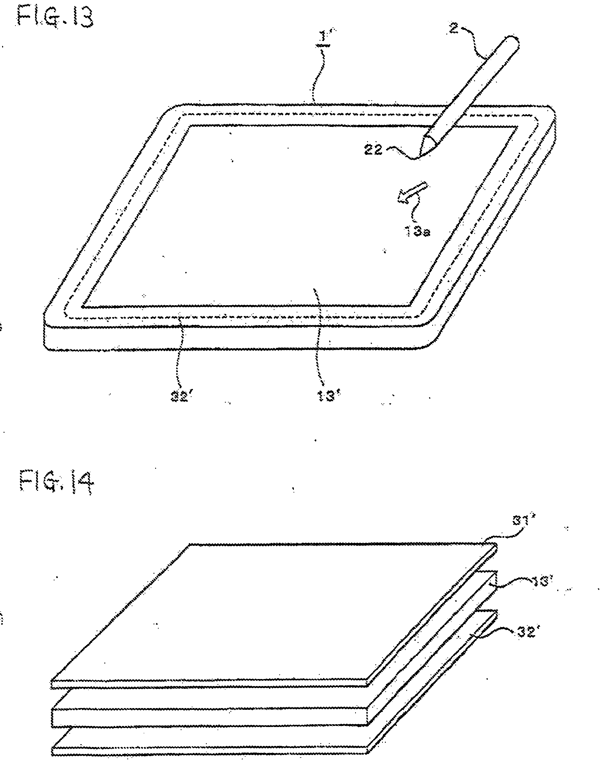

FIG. 8 show a flowchart illustrating a method 800 for controlling display processing based on inputs from a first sense unit and a second sense unit. The first sense unit detects whether an operation surface is directly touched and the second sense unit detects whether a position pointing device approaches said operation surface. The operation surface may be constructed as shown in FIG. 2, or as part of a display as discussed with reference to FIG. 13 below. The position pointing device may be a stylus as discussed above. The method comprises determining if the position pointing device is within a range of the operation surface. The range is shown as d in FIG.6. If the position pointing device is within the range, then display processing based on the output of first sense unit is inhibited in step 802. In step 803, display processing based on the second sense unit is allowed based on the output of the second sense unit. Display processing based on the output of the first sense unit is inhibited when the position pointing device is moved out of the range if the operation surface is touched. The inhibition of processing started in step 804 based on the output of the first sense unit is continued until it is detected that the operational surface is not touched. In step 805, display processing based on the output of the first sense unit is enabled if the operation surface is not touched.

The method 800 illustrated FIG.8, may be implemented as a computer program which is stored in a memory, and run on a processor, for example RAM 43 and CPU 41, respectively shown in FIG.3.

While the position pointing device 2 is able to point the specific position by transmitting and receiving a wireless signal between it and the position detecting unit 3 in the above-described embodiments, the present invention is not limited thereto and the following variant is also possible. For example, the position pointing device 2 may include a built-in power supply apparatus so that the position pointing device 2 may transmit a signal to the position detecting unit 3 in a one-way fashion.

Also, while embodiments of the present invention are applied to a notebook-sized computer apparatus as described above, the embodiments of the present invention are not limited thereto and embodiments of the present invention can be applied to input devices connected to information processing apparatus such as a desktopsized computer apparatus. More specifically, the position pointing unit 3 including the first sense unit 31 and the second sense unit 32 may be constructed as a position detecting apparatus (input device) in which the position detecting unit 3 is housed within a single case and such position detecting apparatus may be connected to a computer apparatus by a suitable wire cable such as a USB (universal serial bus) cable or such position detecting apparatus may transmit a signal to the above computer apparatus in a wireless fashion.

Alternatively, embodiments of the present invention may be applied to input units (or input devices connected to such input units) of information processing apparatus such as a PDA (personal digital assistant), an electronic dictionary, a mobile phone and a portable game machine.

Also, while the first sense unit 31 is constructed as the electrostatic capacity system position detecting unit and the second sense unit 32 is constructed as the electromagnetic system position detecting unit as described in the above-described embodiments, embodiments of the present invention are not limited thereto and the first sense unit 31 may be constructed as a position detecting unit capable of directly detecting by other detecting systems than the electrostatic capacity system whether or not the operation surface is touched.

Next, a further embodiment of the present invention will be described with reference to FIGS. 13 to 17. In FIGS. 13 to 17, elements and parts identical to those of FIGS. 1 to 12 in the above-mentioned embodiment are denoted by identical reference numerals. Elements and parts denoted by reference numerals with primes in the present embodiment are identical elements and parts with identical functions denoted by reference numerals without primes in the above described embodiment but those elements and parts are slightly different in arrangement and the like. Portions common to the arrangement and processing described in the above embodiment will be properly described with reference to FIGS. 1 to 12.

FIG. 13 is an external view showing a schematic arrangement of a computer apparatus 1' according to an embodiment of the present invention. The computer apparatus 1' shown in FIG. 13 is what might be called a tablet-type computer apparatus which can be operated by stylus input and this computer apparatus 1' includes a display panel 13'. The display panel 13' is constructed by a suitable display such as a liquid-crystal display panel or an EL (electro-luminescence) display. In the layout place of the display panel 13', there are disposed a first sense unit 31' and a second sense unit 32' as operation input devices. Details of the layout states will be described later on. It should be noted that the above-described computer apparatus 1' may include other operation input devices such as a keyboard and a pointing device.

The first sense unit 31' is a position detecting apparatus for detecting the contact position (absolute position or relative position) at which the surface of the display panel 13' is touched with the user's finger.

The second sense unit 32' is able to detect position input operation done by the position pointing device 2 which is independently provided of the computer apparatus 1'.

The position pointing device 2 is constructed within the pen-like case 21 and the tip end (pen-point) 22 is projected from the tip end of this pen-shaped case 21. When the position pointing device 2 is in use, the user holds the position pointing device 2 in exactly the same manner as to hold the pen or stylus and presses the tip end (or pen-point) 22 against the display surface of the display panel 13'. It should be noted that the position pointing device 2 in this embodiment of the present invention may not include a power supply such as a battery.

When operated by the user, the position pointing device 2 transmits a wireless signal to the second sense unit 32' owing to the functions of the resonance circuit 26 and the IC 25 disposed within the position pointing device 2 shown in FIG. 5. The second sense unit 32' is able to detect the position pointed by the position pointing device 2 by receiving the wireless signal transmitted from the position pointing device 2. Also, according to the functions of the IC 25 and the resonance circuit 26, the position pointing device 2 detects thrust (stylus pressure) applied to the pen-point 22 when it is operated, generates a signal indicative of stylus pressure level and transmits this indicating the stylus pressure level to the second sense unit 32' together with a signal which points the position. Further, the position pointing device 2 transmits the signal indicative of the stylus pressure level to the second sense unit 32' together with the position pointing signal according to the functions of the IC 25 and the resonance circuit 26.

The second sense unit 32' is able to detect the position pointed by the position pointing device 2 and to detect stylus pressure applied to the pen-point 22 when it is operated by receiving the signal transmitted from the position pointing device 2.

The first sense unit 31' is shaped so as to detect contact with substantially the same area as that of the display surface of the display panel 13'. The second sense unit 32' is shaped so as to detect by an area (range shown by a broken line in FIG. 13) slightly larger than that of the display surface of the display panel 13' whether the position pointing device 2 is approaching or contacts the display surface of the position pointing device 2.

The first and second sense units 31' and 32' have flat detection surfaces which are substantially square in which an imaginary X-Y orthogonal coordinates system is set in which its ling side direction is assumed to be X direction and its short side direction is assumed to be Y direction. The first and second sense units 31' and 32' are able to detect the position at which the user's finger touches the display surface of the display panel 13' and the position pointed by the position pointing device 2 as the absolute position or the relative position in the above-described X-Y orthogonal coordinates system.

Then, the computer apparatus 1' is able to realize various kinds of functions as computer by realizing various kinds of application programs in accordance with instructions based on operation inputs detected by the first and second sense units 31' and 32'. When the application programs are executed, various kinds of screens concerning data being processed and the like are displayed on the display panel 13'. When the pointing of the position is detected by the first and second sense units 31' and 32', the displayed position of the pointer 13a displayed on the display panel 13', for example, is changed in response to the detected state. The displayed position may be changed under display control of the CPU 41 (FIG. 3).

FIG. 14 is an exploded perspective view showing, in an exploded fashion, the portion near the display panel 13' of the computer apparatus 1', that is, the state in which the first and second sense units 31' and 32' are located in actual practice. In the case of this embodiment, as shown in FIG. 14, the first sense unit 31' is located on the display surface of the display panel 13' constructed by a suitable device such as a liquid-crystal display panel and the second sense unit 32' is located at the back of the display panel 13'. The first sense unit 31' includes a transparent substrate on which transparent electrodes and the like are disposed. The second sense unit 32' is slightly larger in size than that of the display surface of the display panel 13' and its detection range is enlarged to the peripheral portion. It should be noted that, when the display panel 13' is constructed by the liquid-crystal display panel, for example, a backlight required by the display panel may be housed within the display panel 13' and that the second sense unit 32' may be located on the back side of the backlight.

It should be noted that sense assemblies constructing the first and second sense units 31' and 32' may incorporate therein circuit assemblies operable as the electrostatic capacity system position detecting unit 50 (FIG. 3) and the electromagnetic system position detecting unit 60 (FIG. 3). To be more concrete, circuit assemblies operable as the detecting units may be mounted on the peripheral portion of the substrate constructing these sense assemblies, for example. Alternatively, a relatively small substrate in which circuit assemblies operable as detecting units are mounted may be connected to the peripheral portion of the substrate constructing the sense part and thereby formed as an integrated sense part.

A functional arrangement of the computer apparatus 1' is the same as that of the arrangement that has already been described with reference to FIG. 3 and it is different only in that the display 13 shown in FIG. 3 is replaced with the display panel 13'.

A functional arrangement and detection operations of the electrostatic capacity system position detecting unit 50 are the same as those of the arrangement of the electrostatic capacity system position detecting unit 50 that is described above with reference to FIG. 4. More specifically, as shown in FIG. 4, the electrostatic capacity system position detecting unit (operation detecting apparatus) 50 includes the first sense unit 31' and the electrostatic capacity detecting circuit (electrostatic capacity detecting unit) 51 connected to electrodes disposed within this first sense unit 31.

An arrangement and detection operations of the electromagnetic system position detecting unit 60 are the same as those of the arrangement of the electrostatic capacity system position detecting unit 60 that is described above with reference to FIG. 5. More specifically, as shown in FIG. 5, the electromagnetic system position detecting unit 60 has an arrangement in which respective loop coils 612 and respective loop coils 613 of the second sense unit 32' are connected to an electromagnetic system detecting circuit (electromagnetic system detection function unit) 600. Each loop coil 612 is a coil located in the X-axis direction and each loop coil 613 is a coil located in the Y-axis direction.

According to the computer apparatus 1' having the above-mentioned arrangement, the computer apparatus 1' includes the electrostatic capacity system position detecting unit 50 to detect operations done by the user's finger and the electromagnetic system position detecting unit 60 to detect position input operations done by the position pointing device 2 and hence it is able to individually detect the operations done by the user's finger on the display surface and the operations done by the position pointing device 2. Consequently, it becomes possible to make input operations by a plurality of methods with different feels of operation and operability can be improved.

Also, as shown in FIG. 14, since the first sense unit 31' to detect operations done by the user's finger and the second sense unit 32' to detect operations done by the position pointing device 2 sandwich the display panel 13' in the upper and lower direction, it becomes possible to execute input operations by using the user's finger and the position pointing device 2 and hence embodiments of the present invention can be easily applied to small equipment of which case size is limited. The input operation based on detection at the electrostatic capacity system position detecting unit 50 using the first sense unit 31' and the input operation based on detection at the electromagnetic system position detecting unit 60 using the second sense unit 32' are prevented from being carried out at the same time and only one input operation may be accepted based on the operation states. In some cases, both of the input operations may not be accepted.

Next, the state in which two detecting processing of the electrostatic capacity system contact detection at the first sense unit 31' and electromagnetic detection of contact or approach of the position pointing device 2 at the second sense unit 32' are selectively executed will be described below.

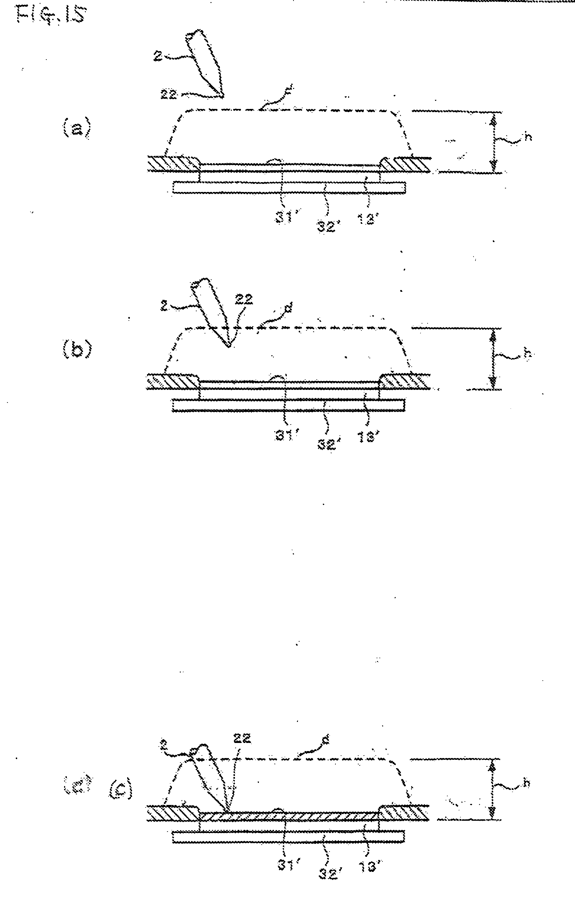

FIGS. 15A to 15C are cross-sectional views showing the portion in which the display panel 13' of the computer apparatus 1' according to this embodiment of the present invention is located, respectively. As shown in FIG. 15A, the first sense unit 31' and the second sense unit 32' sandwich the display panel 13' in the upper and lower direction and the surface of the first sense unit 31' is formed as the display surface (surface) of the display panel 13'.

The first sense unit 31' is adapted to execute processing to detect whether or not the surface of the display panel 13' is directly touched with the user's finger. The second sense unit 32' is adapted to execute processing to detect whether the tip end (pen-point) 22 of the pen-like position pointing device 2 approaches or contacts the surface of the display panel 13'. In order to detect whether the tip end 22 of the pen-shaped position pointing device 2 approaches or contacts the surface of the display panel 13', as shown in FIG. 15A, there are determined the detection range d to detect whether the pen-point 22 of the pen-like position pointing device 2 approaches the height less than the height h from the surface. Accordingly, the control circuit 601 (FIG. 1) within the electromagnetic system position detecting unit 60 is adapted to determine whether or not the tip end 22 of the position pointing device 2 lies within the detection range d. The height h is a height of approximately 1 cm.

It should be noted in the case of this embodiment that the area of the second sense unit 32' is larger than that of the first sense unit 31' and the first and second detection ranges d1 and d2 are extended up to the peripheral portion in which nothing is displayed on the display panel 13'.

The states shown in FIGS. 15A to 15C show the changes of the positions of the tip end (pen-point) 22 of the pen-like position pointing device 2. The control circuit 601 is able to discriminate and detect these three states. More specifically, the state shown in FIG. 15A illustrates the state in which the tip end 22 of the position pointing device 2 lies in the outside the detection range d. The state shown in FIG. 15B illustrates the state in which the tip end 22 of the position pointing device 2 lies within the detection range d. The state shown in FIG. 15C illustrates the state in which the tip end 22 of the position pointing device 2 is brought in contact with the surface of the display panel 13'. It should be noted that, in the state in which the tip end 22 of the position pointing device 2 is brought in contact with the surface of the display panel 13 as shown in FIG. 15C, it is possible to detect by the signal from the position detecting device 2 the pressure (stylus pressure) applied when the tip end 22 of the position pointing device 2 is brought in contact with the surface of the display panel 13'. As shown in FIGS. 15A to 15C, since the area of the first sense unit 31' is made larger than that of the second sense unit 32', the detection range d is slightly extended in the plane direction. According to this arrangement, even when the position pointing device 2 approaches the surface of the display panel 13' from the lateral direction, it is possible to positively detect the approach of the position pointing device 2 to the surface of the display panel 13'.

Then, based on various kinds of detection states, the control circuit 601 issues an interrupt request to the input unit 45 of the computer apparatus 1. When the conditions which will follow are satisfied, the input processing based on the output from the electromagnetic system position detecting unit 60 may be carried out with priority to the input processing based on the output from the electrostatic capacity system position detecting unit 50.

The processing for switching the touch input and the stylus input which has been described so far with reference to the flowchart shown in FIG. 7 in the first embodiment may be applied to the input processing selection states based on the outputs from the two detecting units 50 and 60. More specifically, the first example will be described with reference to the flowchart shown in FIG. 7. Referring to FIG. 7, it is determined at the decision step S13 whether or not the tip end 22 of the pen-like position pointing device 2 is within the detection range d (FIGS. 15A to 15C). If the tip end 22 of the pen-like position pointing device 2 lies outside the detection range d as represented by a NO at the decision step S13, then the control circuit 601 is set to the standby mode in which only the touch input is made possible. If on the other hand the pen-point 22 of the pen-like position pointing device 2 is within the detection range d as represented by a YES at the decision step S13, then control goes to the step S14, whereat the processing to inhibit the touch processing is executed. Then, control goes to the step S15, whereat the detection data of the stylus input processing is supplied to the input unit 45 and the display control based on the detection data is carried out. Control goes to the next step S16, whereat the display control processing corresponding to the approaching distance of the tip end 22 of the pen-like position pointing device 2 and the stylus pressure is executed. Then, control goes to the next decision step S17, whereat it is determined whether or not the tip end 22 of the position pointing device 2 is moved outside of the detection range d. If the tip end 22 of the pen-like position pointing device 2 is not outside the detection range d (that is, the tip end 22 of the pen-like position pointing device 2 lies within the detection range d) as represented by a NO at the decision step S17, then control goes back to the step S14 and the steps S14 to S16 are repeatedly executed.

If on the other hand the tip end 22 of the pen-like position pointing device 2 is moved outside the detection range d as represented by a YES at the decision step S17, then control goes to the step S18, whereat the detection data is not supplied to the input unit 45 and the control circuit 601 is placed in the standby mode, then control goes to the step S20, whereat the control circuit 601 is returned to the state in which the touch input processing is made possible. Then, control goes back to the decision step S13.

It should be noted also that in embodiments of the present invention the processing shown in the flowchart (example 1) of FIG. 9 and the processing shown in the flowchart (example 2) of FIG. 10 can be applied to the detailed processing example at the step S16 in the flowcharts of FIG. 7.

Also, the processing in the flowchart shown in FIG. 11 and the processing in the flowchart shown in FIG. 12 can be applied to the processing example (FIG. 11) executed during the touch input is being detected and the processing example (FIG. 12) executed during the stylus input is being detected.

It should be noted that while the position pointing device 2 points the position by transmitting and receiving the wireless signal between it and the second sense unit 32', embodiments of the present invention are not limited thereto. For example, the position pointing device 2 may include a built-in power supply so that the position pointing device 2 may transmit a signal to the second sense unit 32' in a one-way fashion.

Also, while the first sense unit 31' of the electrostatic capacity system position detection is located on the surface of the display panel 13' and the second sense unit 32' of the electromagnetic system position detection is located at the back of the display panel 13' as shown in FIG. 14, embodiments of the present invention are not limited thereto and the first and second sense units 31' and 32' may be located on the surface of the display panel 13', respectively. Also, in that case, both of the first and second sense units 31' and 32' may be combined together.

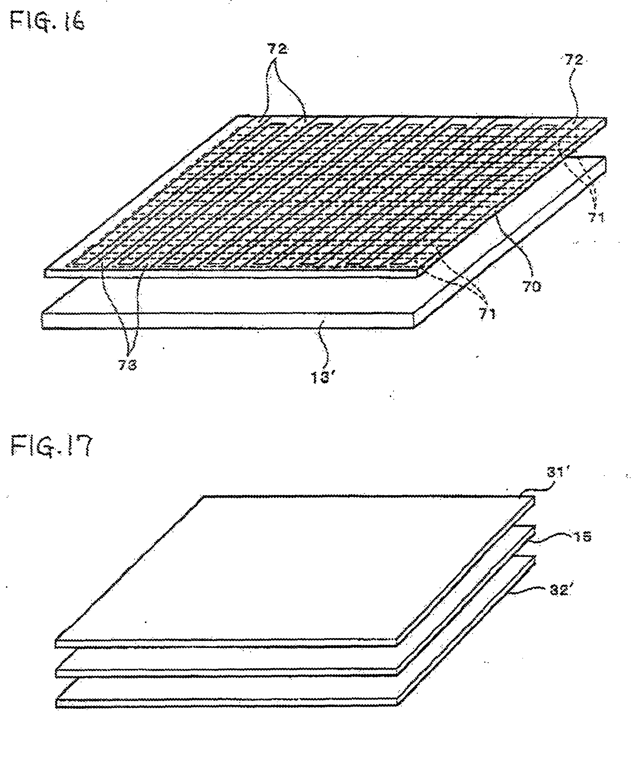

FIG. 16 shows an example in which a combined sense unit (compound sense unit) 70 is located on the surface of the display panel 13'. As shown in FIG. 16, the combined sense unit 70 located on the surface of the display panel 13' includes a transparent substrate which covers the surface of the display panel 13' and a plurality of X-axis coil units 71 formed of transparent electrodes and a plurality of electrostatic capacity sensors 73 formed of transparent electrodes are disposed on the surface of the transparent substrate. When the X-axis coil units 71 and the electrostatic capacity sensors 73 are disposed on the surface of the transparent substrate, they are shaped like strips and each X-axis coil units 71 and the electrostatic capacity sensor 73 are disposed alternately. The X-axis coil units 71 and the electrostatic capacity sensors 73 are each formed of the transparent electrode so as not to hinder display on the display panel 13'.

Also, a plurality of Y-axis coil units 72 having a positional relationship in which they are perpendicular to the X-axis coil units 71 are disposed at the back of the substrate constructing the combined sense unit 70. The Y-axis coil unit 72 also may be formed of a transparent electrode. The X-axis coil unit 71 and the Y-axis coil unit 72 correspond to the loop coils 612 and 613 shown in FIG. 5, respectively, and they are connected to a circuit having an arrangement similar to that shown in FIG. 5 to thereby detect the position. An example in which the processing based on the electrostatic capacity system position detection and the processing based on the electromagnetic system position detection also is made similar to that of the above-described embodiment.

According to the arrangement shown in FIG. 16, since only one combined sense unit 70 is disposed on the surface of the display panel 13' to thereby execute two system detections, it is possible to simplify the detection arrangement.

Also, when the combined sense unit is in use, the first sense unit for the electrostatic capacity system position detection and the second sense unit for the electromagnetic system position detection can use a common sensing unit. That is, the position detection first sense unit to detect whether or not the surface is directly touched with the finger and the electromagnetic system position detection second sense unit to detect approach and contact of the position pointing device can serves as the same coil disposed on the surface of the display panel as well. To be more concrete, the same coil on the sense unit may be alternately connected to a first sense unit detection circuit and a second sense unit detection circuit in a time-sharing manner at a short cycle from a time standpoint so that the detection to detect whether or not the surface of the display panel is directly touched with the finger and the detection to detect approach and contact of the position pointing device can be executed substantially at the same time. Then, the detection switching processing similar to that of the above-described embodiment can be carried out based on the detections of the two detecting circuits. According to this arrangement, it is possible to simplify the arrangement of the coil disposed on the sense unit more.

Also, while the display panel is applied to the liquid-crystal display panel in the above-described embodiment, embodiments of the present invention is not limited thereto and the display panel may be applied to other display devices. For example, as shown in FIG. 17, an electronic paper 15 may be used as the display device. The electronic paper 15 is a display device which can be driven only when display is carried out (only when display is changed) and which can continue display without application of a signal. The electronic paper 15 may be constructed by using a flexible substrate.

When this electronic paper 15 is in use, as shown in FIG. 17, the first sense unit 31' is disposed on the surface (display surface) and the second sense unit 32' is disposed on the back. Alternatively, as in the example shown in FIG. 16, the combined sense unit may be located only on the surface of the electronic paper 15. The circuits connected to the first sense unit 31' and the second sense unit 32' may have the same arrangements as those of the above-described embodiments.

When the electronic paper 15 is constructed by using the flexible substrate, the first sense unit 31' and the second sense unit 32' may be constructed by using the flexible substrates.

When the electronic paper is in use as described above, it is possible to carry out satisfactory input detection and operation.

Alternatively, the devices including the display apparatus can be applied to equipment other than the computer apparatus. That is, the above-mentioned first and second sense units may be disposed on the display portion (display panel) of the information processing apparatus such as a PDA (personal digital assistant), a mobile phone and a portable game machine to which embodiments of the present invention can be applied.

Embodiments of the invention can take the form of an entirely hardware embodiment, an entirely software embodiment or an embodiment containing both hardware and software elements. In a preferred embodiment, the invention is implemented in software, which includes but is not limited to firmware, resident software, microcode, etc.

Furthermore, embodiments of the invention can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

It should be understood by those skilled in the art that various modifications, combinations, sub-combinations and alterations may occur depending on design requirements and other factors insofar as they are within the scope of the appended claims or the equivalents thereof.

### List of reference numerals

**FIG. 3****:**
   - 13:: Display
   - 14:: Key Input unit
   - 44:: Storage Unit
   - 45:: Input Unit
   - 46:: Display Unit
   - 50:: First Sense Unit)
   Electrostatic Capacity System Position DET Unit
   - 60:: (Second Sense Unit)
   Electromagnetic System Position DET Unit
**FIG. 4****:**
   - 31:: First sense Unit
   - 51:: Electrostatic Capacity DET Unit
**FIG. 5****:**
   - 601:: Control CKT
   - 603:: Transmission/Reception Switching CKT
   **606: DETECTOR**
   - 609:: Signal Generating CKT
   - FIG.: 7:
   START
   - S13:: Pen Point of Stylus within range?
   - S14:: Inhibit touch input processing
   - S15:: Supply detected data to input unit and control display based on detected data
   - S16:: Execute display control processing corresponding to approaching distance of Pen Point of stylus and stylus pressure
   - S17:: Pen Point of Sylus outside range?
   - S18:: In the state in which position of Pen Point of Sylus is detected, detected data is not supplied to input unit and place computer apparatus in standby mode
   - S20:: Return computer apparatus to the state in which touch input processing is possible
**FIG. 8****:**
   START
   - 801: Determine if position pointing device within range
   - 802: Inhibit display processing based on first sense unit if position pointing device is within range
   - 803: Allow display processing based on second sense unit if position pointing device is within range
   - 804: Inhibit display processing based on first sense unit when position pointing device moved out of range if operation surface touched
   - 805: Enable display processing based on the first sense unit if operation surface not touched
**FIG. 9****:**
   - S31:: Pen Point of sylus touched surface protecting layer?
   - S32:: Execute processing corresponding to touched position
**FIG. 10****:**
   - S33:: Detect stylus pressure
   - S34:: Control display of thickness of stroke of handwriting in response to magnitude of stylus pressure
**FIG. 11****:**
   - S41:: During touch input is being detected
   - S42:: Pen Pont of stylus within range?
   - S43:: Give detection of Pen-Point of stylus priority and inhibit touch input
**FIG. 12****:**
   - S51:: During pen input is being detected
   - S52:: Touch input detected?
   - S53:: Continue inhibition of touch input

   - S54:: Pen-Point of stylus outside range?
   - S55:: Touch input detected continuously?
   - S56:: Cancel inhibition of touch input

## Claims

1. An information processing apparatus (3) comprising:
- an operational surface (311; 13');
a first sense unit (31; 31') for electrically detecting whether or not said operation surface is directly touched;
- a second sense unit (32; 32') for detecting based on an electromagnetic action generated between the second sense unit and a position pointing device (2) whether said position pointing device approaches or contacts said operation surface;
- an approach detecting unit (60) for detecting based on an output from said second sense unit whether or not said position pointing device is within a range (d) from said operation surface; and
- a display control unit (601) for inhibiting display processing based on a detection output from said first sense unit and allowing display processing to be executed based on the detection output from said second sense unit if said approach detecting unit detects that said position pointing device is within said range;
**characterized in that**
said display control unit continuously inhibits display processing based on the detection output from said first sense unit if said first sense unit detects that said operation surface is touched when said position pointing device is moved to the outside of said range from the state in which it is detected that said position pointing device lies within said range and said display control unit enables display processing to be executed based on the detection output from said first sense unit if said first sense unit does not detect that said operation surface is touched.

2. An information processing apparatus according to claim 1, wherein said second sense unit is located under said first sense unit.

3. An information processing apparatus according to claim 1, wherein said second sense unit has an area larger than that of said first sense unit.

4. An information processing apparatus according to claim 1 wherein a display surface (13') of a display device (1') is constructed as the operation surface and the first sense unit is located on the display surface of said display device; and the second sense unit is located at the back of said display device.

5. An information processing apparatus according to claim 4, wherein said first sense unit has a detection range of which area is substantially equal to the display surface of said display device and said second sense unit has a detection range of which area is wider than that of the detection range of said first sense unit.

6. An information processing apparatus according to claim 1, wherein a display surface (13') of a display device (1') is constructed as the operation surface, and the first sense unit comprises a first sensor electrode (located on the display surface of said display device, the second sense unit comprises a second sensor electrode and said first and second electrodes are formed on a transparent substrate;

7. An information processing apparatus according to claim 6, wherein said first sensor electrode and said second sensor electrode are constructed as a common electrode (70) located on the display surface of said display device, said common electrode being used as said first sensor electrode to detect whether or not said display surface is directly touched and as said second sensor electrode to detect whether said position pointing device approaches or contact said display surface in a time-sharing manner.

8. An information processing apparatus according to claim 7, wherein at least parts of said first sensor electrode and said second sensor electrode are alternately located on a transparent substrate constructing said sense unit.

9. An operation input method of accepting input based on operation by an operation input apparatus (3) comprising an operation surface (311; 13') the method comprising the steps of:
- a first detection processing for electrically detecting whether or not said operation surface is directly touched;
- a second detection processing for detecting based on an electromagnetic coupling generated between said operation surface and a position pointing device (2) whether said position pointing device approaches or contacts said operation surface;
- an approach detection processing for detecting based on an output from said second detection processing whether or not said position pointing device is within a range from said operation surface; and
- a display control processing for inhibiting display processing based on a detection output from said first detection processing and allowing display processing to be executed based on the detection output from said second detection processing if said approach detection processing detects that said position pointing device is within said range;
**characterized in that**
said display control processing continuously inhibits display processing based on the detection output from said first detection processing if said first detects that said operation surface is touched when said position pointing device is moved to the outside of said range from the state in which it is detected that said position pointing device lies within said range and said display control processing enables display processing to be executed based on the detection output from said first sense unit if said first sense unit does not detect that said operation surface is touched.

10. A computer program product stored on a computer usable medium, comprising computer readable program means for causing a computer to perform a method (800) for controlling display processing based on inputs from a first sense unit for detecting whether an operational surface is directly touched and a second sense unit for detecting whether a position pointing device approaches said operation surface, the method comprising:
- determining whether said position pointing device is within a range from said operation surface (S13; 801);
- inhibiting display processing based on a detection output from said first sense unit if said position pointing device is within the range from said operation surface (S14; 802);
- allowing display processing to be executed based on a detection output from said second sense unit if said position pointing device is within said range (S15, S16; 803); **characterized by**
- inhibiting display processing based on the detection output from said first sense unit (S53) if said first sense unit detects that said operation surface is touched (S55) when said position pointing device is moved to the outside of said range (S54) from the state in which it is detected that said position pointing device lies within said range (804); and
- enabling display processing to be executed based on the detection output from said first sense unit if said first sense unit does not detect that said operation surface is touched (S56; 805).

## Patentansprüche

1. Informationsverarbeitungsvorrichtung (3), umfassend:
- eine operationale Oberfläche (311, 13');
eine erste Erfassungseinheit (31, 31') zum elektrischen Erfassen, ob die Operationsoberfläche direkt berührt wird oder nicht;
- eine zweite Erfassungseinheit (32; 32') zum Detektieren auf der Basis einer zwischen der zweiten Erfassungseinheit und einer Positionszeigeeinrichtung (2) erzeugten elektromagnetischen Wirkung, ob sich die Positionszeigeeinrichtung der Operationsoberfläche nähert oder diese kontaktiert;
- eine Annäherungsdetektionseinheit (60) zum Detektieren auf der Basis einer Ausgabe der zweiten Erfassungseinheit, ob sich die Positionszeigeeinrichtung innerhalb einer Entfernung (d) der Operationsoberfläche befindet; und
- eine Anzeigesteuereinheit (601) zum Sperren der Anzeigeverarbeitung auf der Basis einer Detektionsausgabe der ersten Erfassungseinheit und zum Ermöglichen der Ausführung der Anzeigeverarbeitung auf der Basis der Detektionsausgabe der zweiten Erfassungseinheit, wenn die Annäherungsdetektionseinheit detektiert, dass sich die Positionszeigeeinrichtung innerhalb der Entfernung befindet;
**dadurch gekennzeichnet, dass** die Anzeigesteuereinheit die Anzeigeverarbeitung kontinuierlich auf der Basis der Detektionsausgabe der ersten Erfassungseinheit sperrt, wenn die die erste Erfassungseinheit detektiert, dass die Operationsoberfläche berührt wird, wenn die Positionszeigeeinrichtung von dem Zustand aus, in dem detektiert wird, dass die Positionszeigeeinrichtung innerhalb der Entfernung liegt, außerhalb der Entfernung bewegt wird, und die Anzeigesteuereinheit die Ausführung der Anzeigeverarbeitung auf der Basis der Detektionsausgabe der ersten Erfassungseinheit ermöglicht, wenn die erste Erfassungseinheit nicht detektiert, dass die Operationsoberfläche berührt wird.

2. Informationsverarbeitungsvorrichtung nach Anspruch 1, wobei sich die zweite Erfassungseinheit unter der ersten Erfassungseinheit befindet.

3. Informationsverarbeitungsvorrichtung nach Anspruch 1, wobei die zweite Erfassungseinheit eine größere Fläche als die erste Erfassungseinheit aufweist.

4. Informationsverarbeitungsvorrichtung nach Anspruch 1, wobei die Anzeigeoberfläche (13') einer Anzeigeeinrichtung (1') als die Operationsoberfläche konstruiert ist und sich die erste Erfassungseinheit auf der Anzeigeoberfläche der Anzeigeeinrichtung befindet; und sich die zweite Erfassungseinheit auf der Rückseite der Anzeigeeinrichtung befindet.

5. Informationsverarbeitungsvorrichtung nach Anspruch 4, wobei die erste Erfassungseinheit einen Detektionsbereich aufweist, dessen Fläche im Wesentlichen gleich der Anzeigeoberfläche der Anzeigeeinrichtung ist, und die zweite Erfassungseinheit einen Detektionsbereich aufweist, dessen Fläche breiter als die des Detektionsbereichs der ersten Erfassungseinheit ist.

6. Informationsverarbeitungsvorrichtung nach Anspruch 1, wobei eine Anzeigeoberfläche (13') einer Anzeigeeinrichtung (1') als die Operationsoberfläche konstruiert ist und die erste Erfassungseinheit eine auf der Anzeigeoberfläche der Anzeigeeinrichtung befindliche erste Sensorelektrode umfasst, die zweite Erfassungseinheit eine zweite Sensorelektrode umfasst und die erste und die zweite Elektrode auf einem transparentem Substrat gebildet sind.

7. Informationsverarbeitungsvorrichtung nach Anspruch 6, wobei die erste Sensorelektrode und die zweite Sensorelektrode als eine gemeinsame Elektrode (70) konstruiert sind, die sich auf der Anzeigeoberfläche der Anzeigeeinrichtung befindet, wobei die gemeinsame Elektrode auf Time-Sharing-Weise als die erste Sensorelektrode verwendet wird, um zu detektieren, ob die Anzeigeoberfläche direkt berührt wird oder nicht, und als zweite Sensorelektrode, um zu detektieren, ob sich die Positionszeigeeinrichtung der Anzeigeoberfläche nähert oder diese kontaktiert.

8. Informationsverarbeitungsvorrichtung nach Anspruch 7, wobei mindestens Teile der ersten Sensorelektrode und der zweiten Sensorelektrode alternierend auf einem die Erfassungseinheit konstruierenden transparenten Substrat befindlich sind.

9. Operationseingabeverfahren zur Annahme von Eingaben auf der Basis von Operationen durch eine Operationseingabevorrichtung (3) mit einer Operationsoberfläche (311; 13'), wobei das Verfahren die folgenden Schritte umfasst:
- eine erste Detektionsverarbeitung zum elektrischen Detektieren, ob die Operationsoberfläche direkt berührt wird oder nicht;
- eine zweite Detektionsverarbeitung zum Detektieren auf der Basis einer zwischen der Operationsoberfläche und einer Positionszeigeeinrichtung (2) erzeugten elektromagnetischen Kopplung, ob sich die Positionszeigeeinrichtung der Operationsoberfläche nähert oder diese kontaktiert;
- eine Annäherungsdetektionsverarbeitung zum Detektieren auf der Basis einer Ausgabe der zweiten Detektionsverarbeitung, ob sich die Positionszeigeeinrichtung innerhalb einer Entfernung von der Operationsoberfläche befindet oder nicht; und
- eine Anzeigesteuerverarbeitung zum Sperren der Anzeigeverarbeitung auf der Basis einer Detektionsausgabe der ersten Detektionsverarbeitung und zum Erlauben der Ausführung der Anzeigeverarbeitung auf der Basis der Detektionsausgabe der zweiten Detektionsverarbeitung, wenn die Annäherungsdetektionsverarbeitung detektiert, dass sich die Positionszeigeeinrichtung innerhalb der Entfernung befindet;
**dadurch gekennzeichnet, dass**
die Anzeigesteuerungsverarbeitung kontinuierlich auf der Basis der Detektionsausgabe der ersten Detektionsverarbeitung Anzeigeverarbeitung sperrt, wenn die erste Detektionsverarbeitung detektiert, dass die Operationsoberfläche berührt wird, wenn die Positionszeigeeinrichtung von dem Zustand aus, in dem detektiert wird, dass die Positionszeigeeinrichtung innerhalb der Entfernung liegt, außerhalb der Entfernung bewegt wird, und die Anzeigesteuerverarbeitung die Ausführung der Anzeigeverarbeitung auf der Basis der Detektionsausgabe der ersten Erfassungseinheit ermöglicht, wenn die erste Erfassungseinheit nicht detektiert, dass die Operationsoberfläche berührt wird.

10. Computerprogrammprodukt, das auf einem computerbenutzbaren Medium gespeichert ist und computerlesbare Programmmittel umfasst, um zu bewirken, dass ein Computer ein Verfahren (800) zum Steuern von Anzeigeverarbeitung auf der Basis von Eingaben aus einer ersten Erfassungseinheit zum Detektieren, ob eine operationale Oberfläche direkt berührt wird, und einer zweiten Erfassungseinheit zum Detektieren, ob sich eine Positionszeigeeinrichtung der Operationsoberfläche nähert, ausführt, wobei das Verfahren die folgenden Schritte umfasst:
- Bestimmen, ob sich die Positionszeigeeinrichtung innerhalb einer Entfernung von der Operationsoberfläche befindet (S13; 801);
- Sperren der Anzeigeverarbeitung auf der Basis einer Detektionsausgabe der ersten Erfassungseinheit, wenn sich die Positionszeigeeinrichtung innerhalb der Entfernung von der Operationsoberfläche befindet (S14; 802);
- Erlauben der Ausführung der Anzeigeverarbeitung auf der Basis einer Detektionsausgabe der zweiten Erfassungseinheit, wenn sich die Positionszeigeeinrichtung innerhalb der Entfernung befindet (S15, S16; 803); **gekennzeichnet durch**
- Sperren der Anzeigeverarbeitung auf der Basis der Detektionsausgabe der ersten Erfassungseinheit (S53), wenn die erste Erfassungseinheit detektiert, dass die Operationsoberfläche berührt wird (S55), wenn die Positionszeigeeinrichtung von dem Zustand aus, in dem detektiert wird, dass die Positionszeigeeinrichtung innerhalb der Entfernung liegt (804) außerhalb der Entfernung bewegt wird (S54); und
- Ermöglichen der Ausführung der Anzeigeverarbeitung auf der Basis der Detektionsausgabe der ersten Erfassungseinheit, wenn die erste Erfassungseinheit nicht delektiert, dass die Operationsoberfläche berührt wird (S56; 805).

## Revendications

1. Appareil de traitement d'informations (3) comprenant:
- une surface opérationnelle (311 ; 13');
- une première unité de détection (31 ; 31') pour détecter électriquement si ladite surface opérationnelle est touchée ou non directement;
- une seconde unité de détection (32 ; 32') pour détecter en fonction d'une action électromagnétique générée entre la seconde unité de détection et un dispositif de pointage de position (2) si ledit dispositif de pointage de position s'approche ou non de ladite surface opérationnelle ou fait contact ou non avec elle ;
- une unité de détection d'approche (60) pour détecter en fonction d'une sortie de ladite seconde unité de détection si ledit dispositif de pointage de position est situé ou non en deçà d'une distance (d) de ladite surface opérationnelle ; et
- une unité de commande d'affichage (601) pour inhiber un traitement d'affichage en fonction d'une sortie de détection de ladite première unité de détection et permettre l'exécution du traitement d'affichage en fonction de la sortie de détection de ladite seconde unité de détection si ladite unité de détection d'approche détecte que ledit dispositif de pointage de position est situé en deçà de ladite distance ;
**caractérisé en ce que**
ladite unité de commande d'affichage inhibe continûment le traitement d'affichage en fonction de la sortie de détection de ladite première unité de détection si ladite première unité de détection détecte que ladite surface opérationnelle est touchée quand ledit dispositif de pointage de position est déplacé au-delà de ladite distance depuis l'état dans lequel il est détecté que ledit dispositif de pointage de position est situé en deçà de ladite distance et ladite unité de commande d'affichage permet l'exécution du traitement d'affichage en fonction de la sortie de détection de ladite première unité de détection si ladite première unité de détection ne détecte pas que ladite surface opérationnelle est touchée.

2. Appareil de traitement d'informations selon la revendication 1, dans lequel ladite seconde unité de détection est située sous ladite première unité de détection.

3. Appareil de traitement d'informations selon la revendication 1, dans lequel ladite seconde unité de détection a une superficie supérieure à celle de ladite première unité de détection.

4. Appareil de traitement d'informations selon la revendication 1, dans lequel une surface d'affichage (13') d'un dispositif d'affichage (1') est construite en tant que surface opérationnelle et la première unité de détection est située sur la surface d'affichage dudit dispositif d'affichage ; et la seconde unité de détection est située à l'arrière dudit dispositif d'affichage.

5. Appareil de traitement d'informations selon la revendication 4, dans lequel ladite première unité de détection a une distance de détection dont la superficie est sensiblement égale à la surface d'affichage dudit dispositif d'affichage et ladite seconde unité de détection a une distance de détection dont la superficie est plus large que celle de la distance de détection de ladite première unité de détection.

6. Appareil de traitement d'informations selon la revendication 1, dans lequel une surface d'affichage (13') d'un dispositif d'affichage (1') est construite en tant que surface opérationnelle, et la première unité de détection comprend une première électrode de détection (située sur la surface d'affichage dudit dispositif d'affichage), la seconde unité de détection comprend une seconde électrode de détection et lesdites première et seconde électrodes sont formées sur un substrat transparent.

7. Appareil de traitement d'informations selon la revendication 6, dans lequel ladite première électrode de détection et ladite seconde électrode de détection sont construites en tant qu'électrode commune (70) située sur la surface d'affichage dudit dispositif d'affichage, ladite électrode commune étant utilisée comme dite première électrode de détection pour détecter si ladite surface d'affichage est touchée ou non directement et comme dite seconde électrode de détection pour détecter si ledit dispositif de pointage de position s'approche ou non de ladite surface d'affichage ou contacte ou non celle-ci d'une façon partagée dans le temps.

8. Appareil de traitement d'informations selon la revendication 7, dans lequel au moins des parties de ladite première électrode de détection et de ladite seconde électrode de détection sont situées alternativement sur un substrat transparent construisant ladite unité de détection.

9. Procédé d'entrée d'opération pour accepter une entrée en fonction d'une opération par un appareil d'entrée d'opération (3) comprenant une surface opérationnelle (311 ; 13'), le procédé comprenant les étapes suivantes :
- un premier traitement de détection pour détecter électriquement si ladite surface opérationnelle est touchée ou non directement ;
- un second traitement de détection pour détecter en fonction d'un accouplement électromagnétique généré entre ladite surface opérationnelle et un dispositif de pointage de position (2) si ledit dispositif de pointage de position s'approche ou non de ladite surface opérationnelle ou contacte ou non celle-ci ;
- un traitement de détection d'approche pour détecter en fonction d'une sortie dudit second traitement de détection si ledit dispositif de pointage de position est situé ou non en deçà d'une distance de ladite surface opérationnelle ; et
- un traitement de commande d'affichage pour inhiber le traitement d'affichage en fonction d'une sortie de détection dudit premier traitement de détection et permettre l'exécution du traitement d'affichage en fonction de la sortie de détection dudit second traitement de détection si ledit traitement de détection d'approche détecte que ledit dispositif de pointage de position est situé en deçà de ladite distance ;
**caractérisé en ce que**
ledit traitement de commande d'affichage inhibe continûment le traitement d'affichage en fonction de la sortie de détection dudit premier traitement de détection si ledit premier traitement de détection détecte que ladite surface opérationnelle est touchée quand ledit dispositif de pointage de position est déplacé au-delà de ladite distance depuis l'état dans lequel il est détecté que ledit dispositif de pointage de position est situé en deçà de ladite distance et ledit traitement de commande d'affichage permet l'exécution du traitement d'affichage en fonction de la sortie de détection de ladite première unité de détection si ladite première unité de détection ne détecte pas que ladite surface opérationnelle est touchée.

10. Produit de programme informatique stocké sur un support utilisable sur ordinateur, comprenant un moyen de programme lisible par ordinateur pour amener un ordinateur à exécuter un procédé (800) de commande d'un traitement d'affichage en fonction d'entrées provenant d'une première unité de détection pour détecter si une surface opérationnelle est touchée ou non directement et d'une seconde unité de détection pour détecter si un dispositif de pointage de position s'approche ou non de ladite surface opérationnelle, le procédé comprenant :
- la détermination si ledit dispositif de pointage de position est situé ou non en deçà d'une distance de ladite surface opérationnelle (S13 ; 801) ;
- l'inhibition du traitement d'affichage en fonction d'une sortie de détection de ladite première unité de détection si ledit dispositif de pointage de position est situé en deçà de la distance de ladite surface opérationnelle (S14 ; 802) ;
- l'autorisation de l'exécution du traitement d'affichage en fonction de la sortie de détection de ladite seconde unité de détection si ledit dispositif de pointage de position est situé en deçà de ladite distance (S15, S16 ; 803) ; **caractérisé par**
- l'inhibition du traitement d'affichage en fonction de la sortie de détection de ladite première unité de détection (S53) quand ladite première unité de détection détecte que ladite surface opérationnelle est touchée (S55) quand ledit dispositif de pointage de position est déplacé au delà de ladite distance (S54) depuis l'état dans lequel il est détecté que ledit dispositif de pointage de position est situé en deçà de ladite distance (804) ; et
- la validation de l'exécution du traitement d'affichage en fonction de la sortie de détection de ladite première unité de détection si ladite première unité de détection ne détecte pas que ladite surface opérationnelle est touchée (S56 ; 805).
